# EUROPEAN PATENT APPLICATION

(11) **EP 3 766 454 A1**
(43) Date of publication of application: **20.01.2021**
(21) Application number: 19382613.8
(22) Date of filing: 19.07.2019
(51) Int. Cl.: A61C 13/08, A61C 13/00, A61C 5/64, A61C 5/60

(54) **MACHINE FOR AUTOMATICALLY PREPARING A DENTAL CERAMIC COMPOSITION, CORRESPONDING CONTAINER AND SET OF CONTAINERS**

(71) Applicant: Soler Brullet, Carlos, 08950 Esplugues de Llobregat (ES); Pérez Yanini, Juan Carlos, 08392 Sant Andreu de LLavaneres (ES); Bruguera Alvarez, Augusto, 08329 Teià (ES)
(72) Inventor: Soler Brullet, Carlos, 08950 Esplugues de Llobregat (ES); Pérez Yanini, Juan Carlos, 08392 Sant Andreu de LLavaneres (ES); Bruguera Alvarez, Augusto, 08329 Teià (ES)
(74) Representative: Curell Suñol S.L.P.

(57) **Abstract**

The invention relates to a machine for automatically preparing a dental ceramic composition, comprising: data input means for inputting data relating to said composition; a plurality of containers (5) each of which contains a powder product with at least one component of a dental ceramic composition; a dose metering device suitable for taking a dose of said powder product from said containers (5); and a control system for said dose metering device, configured for determining the powder product doses of each of said containers (5) necessary for obtaining said composition from said data, and for activating said dose metering device to meter out the doses determined in [d1]. The containers (5) are removable cartridges. The invention also relates to a container in the form of removable cartridge suitable for being used in the machine and to a set of said containers.

## Description

### Field of the Invention

The invention relates to a machine for automatically preparing a dental ceramic composition, comprising:
[a] data input means for inputting data relating to the dental ceramic composition;
[b] a plurality of containers each of which contains a powder product with at least one component of said dental ceramic composition;
[c] a dose metering device suitable for taking a dose of the powder product from the containers; and
[d] a control system for the dose metering device, configured for:
   [d1] determining the powder product doses of each of the containers necessary for obtaining said dental ceramic composition from said data, and
   [d2] activating the dose metering device to meter out the doses determined in [d1].

Another object of the invention is a container for a machine for automatically preparing a dental ceramic composition, preferably for a machine according to the invention, as well as a set of said containers.

### State of the Art

In cosmetic dentistry and oral implantology, it is necessary to prepare precise mixtures of ceramic powder materials and color for dental restorations. These mixtures must result in a material with a color that resembles as much as possible the tooth to be replaced. To that end, there is usually a major (referred to as "main") component and minor components the main function of which is to adjust the color. There is frequently more than one "main" component, such that the most suitable one (or a mixture thereof) for each specific case can be chosen. This is usually done in dentistry laboratories, using specialized personnel who compare the color of the tooth to be restored with a shade card in which the mixture to be made for each color of the card is specified. However, the results are not always optimal, are frequently not precise enough, and present repeatability problems.

Document WO 2005/072227 A2 describes a machine for automatically preparing a dental ceramic composition such as the one indicated above. However, it does not include any type of minimally detailed information about the machine, and said machine is not known to have been carried out to practice. At present, the methods that are followed are still highly artisanal (and require specialized personnel) and/or carried out in specialized laboratories. There is a need for machines that allow automating the method, that offer repetitive, high-quality results, that do not require specialized personnel, and that are low-cost.

### Description of the Invention

The object of the invention is to overcome these drawbacks. This is achieved by means of a machine for automatically preparing a dental ceramic composition of the type indicated above, characterized in that the containers are removable cartridges, which are preferably single-use cartridges.

Indeed, the machine according to the invention has a plurality of advantages. The machine according to the invention can have a small size and also a reduced cost. The machine can therefore be located in the dentistry laboratory and not in a specialized laboratory. This has a plurality of advantages:
- Savings in logistic costs. It must be taken into account that a mixture must often be obtained for performing a single reconstruction. The logistic costs, therefore, are a relevant part that can thereby be eliminated.
- Shorter delivery times. The dentistry laboratory can immediately make the required mixture without needing to wait for it to be supplied by the specialized laboratory.
- Higher precision when reproducing the color of the original tooth. Rather than being subject to a range of colors predefined by the specialized laboratory and reproduced in a color palette, the dentistry laboratory can modify the component mixture to obtain the one that most resembles the actual case of the patient to be treated. To that end, optionally, the laboratory can use a color reader device, which obtains an exact identification of the color of a tooth of the patient and provides the machine with the data necessary for automatically preparing a dental ceramic composition with an exact corresponding color. Furthermore, in the event that a mixture does not present the expected color, the dentistry laboratory can quickly make another mixture. In other words, the response speed in a "trial and error" process to obtain a color that departs from the predefined colors can be much faster.
- Moreover, it must be taken into account that the powder products in the containers must comply with not only strict quality requirements but also strict sanitary requirements. The distribution of the removable powder products in containers allows being able to supply them to the dentistry laboratory in sealed containers, prepared under controlled conditions and complying with all sanitary requirements. The dentistry laboratory does not have to be concerned with the correct handling of these powder products because it will not have to handle them at all. All the laboratory has to do is replace the empty containers with full containers where appropriate.

The powder products in the containers can be any of the products available on the market for making up a dental ceramic. Preferably, the containers contain a component mixture comprising pigments, the pigment composition being different between at least two of the containers. The component mixture forming the powder product can be, for example, a mixture comprising feldspar, quartz, kaolin, and pigments, preferably metallic pigments, among other possible components.

Preferably, the dose metering device is formed by a pushing member, a plurality of injectors, each of the injectors associated with a container, and relative movement means for relative movement between the pushing member and the injectors. This solution allows the combination of an economy of elements (a single pushing member) with preventing possible cross-contamination of the powder included in each container (as each container has a specific injector).

Advantageously, the containers are in the shape of a hopper, thereby providing greater assurances that all the powder in the container is utilized.

Preferably, each container comprises an upper inlet hole and each injector comprises a shaft suitable for being inserted through the inlet hole when it is pushed by means of the pushing member, wherein the shaft has, at its lower end, a cavity suitable for housing a dose of the powder product. In this case, it is particularly advantageous for each container to additionally comprise a through hole which goes through it and is suitable for the shaft to go through same, wherein the through hole is not in contact with the inside of the container in which the powder product is located. As will be seen below in the examples, this geometry allows discharging the powder product dose into a collector receptacle in a simple and precise manner. Preferably, the cavity is a cylindrical cavity, open at the bottom, arranged at the lower end of the shaft.

Preferably, the machine comprises second relative movement means suitable for moving each of the containers with respect to their corresponding associated injector. The injector can thereby discharge the powder product dose without interfering with the container.

Advantageously, the pushing member moves integrally with a carrier tray, suitable for carrying a collector receptacle for collecting the doses. In fact, the doses collected from each container must be brought to a collector receptacle. Given that the pushing member already moves towards all the containers needed to make a specific mixture, the movement of the pushing member is thereby utilized for simultaneously moving the collector receptacle to the position suitable for the subsequent discharge of the injector.

Preferably, at least one of the containers has a larger capacity than the remaining containers. In fact, as mentioned above, the mixture usually contains a major component (or a mixture of several major components) and one or more minor components, which are primarily responsible for adjusting the color. Given that the consumption of the major component (the "main" component) will be more than the consumption of the minor components, the use of containers having a larger capacity for this (or these) "main" component(s) will prevent having to replace it (or them) on an excessively frequent basis. In this sense, it is advantageous for the container having a larger capacity to contain an amount of more than 100 grams of powder product, and preferably an amount comprised between 160 and 240 grams of powder product. In turn, it is advantageous for each container having a smaller capacity to contain an amount of more than 25 grams of powder product, and preferably an amount comprised between 40 and 60 grams of powder product. An optimal combination of the duration of the containers, with a balancing of the amount of powder product stored, the empty container replacement frequency, and the usage proportion of the "main" components and minor components is achieved with these values. It is likewise advantageous for the injector associated with a container having a larger capacity to have a cavity having a larger volume than the injector associated with a container having a smaller capacity. Preferably, the injector associated with a container having a larger capacity has a cavity suitable for housing a dose of between 0.1 grams and 0.3 grams of powder product, and very preferably between 0.16 and 0.24 grams of powder product. In turn, it is advantageous for the injector associated with a container having a smaller capacity to have a cavity suitable for housing a dose of between 0.02 grams and 0.06 grams of powder product, preferably between 0.032 and 0.048 grams of powder product. These amounts refer to an initial state of the containers, before use. The cavity of an injector is understood to be suitable for housing a specific amount in grams of powder product when the machine is working under normal conditions and said cavity of the injector houses said specific amount in grams of powder product that said injector has collected from the container associated therewith. The possibility of making any required mixture based on taking one or more doses of each of the components that must be present in the composition is assured with these values.

Preferably, the machine comprises more than 5 containers and very preferably comprises 8 containers having a smaller capacity and 3 containers having a larger capacity. This combination allows being able to have all the components needed for making any mixture required.

Preferably, each container of the machine comprises a body made of an elastomeric material containing said at least one component of a dental ceramic composition, and a rigid body, attached to the body made of an elastomeric material, for removably fixing the container to the machine. As a result of the component being contained in a body made of an elastomeric material, which has certain elasticity, amalgamation of said component, which usually has a powdery composition, and the sticking thereof to the wall of the container is prevented. Therefore virtually all of the component in the container can be removed by the dose metering device of the machine.

Advantageously, the machine comprises vibration means suitable for vibrating the containers, such that it is assured that the powdery material in the container is always accumulated at the lower part of the container. Preferably, each container has associated therewith vibration means, and preferably the vibration means are in direct contact with one of the walls of the container. Advantageously, the vibration means are arranged on an elastic support exerting a force that keeps the vibration means pressed against the wall of the container.

Preferably, the through hole extends to the lower end of the container. It thereby acts as a guide for the dose of material discharged by the injector, and it is assured that all of said material will end up in the collector receptacle.

Another object of the invention is a container for a machine for automatically preparing a dental ceramic composition, characterized in that it
- contains a powder product with at least one component of said dental ceramic composition;
- comprises an upper inlet hole suitable for a shaft of an injector to go through same, wherein the shaft has, at its lower end, a cavity suitable for housing a dose of the powder product; and
- is a removable cartridge that can be removed from the machine.

Preferably, the machine is a machine according to the invention.

Preferably, the container is in the shape of a hopper.

As discussed above, the container preferably comprises a through hole which goes through said container and is suitable for the shaft to go through same, wherein the through hole is not in contact with the inside of the container in which the powder product is located, and in a highly advantageous manner the through hole extends to the lower end of the container.

Preferably, the container contains an amount of more than 100 grams of powder product, and very preferably an amount comprised between 160 and 240 grams of powder product, or else it preferably contains an amount of more than 25 grams of powder product, and very preferably an amount comprised between 40 and 60 grams of powder product, depending on whether it is to be loaded with a major component or with a minor component of the mixture.

Preferably, the container comprises a body made of an elastomeric material containing said powder product with at least one component of a dental ceramic composition, and a rigid body, attached to the body made of an elastomeric material, for removably fixing the container to the machine.

Another object of the invention is a set of containers for a machine for automatically preparing a dental ceramic composition, wherein each of said containers is a container according to the invention, as described above, and each of said containers is a removable cartridge that can be removed from said machine, and wherein the powder product contained in at least one of said containers is different from the powder product contained in at least another one of said containers.

### Brief Description of the Drawings

Other advantages and features of the invention can be seen from the following description in which a preferred embodiment of the invention is described in a nonlimiting manner in reference to the appended drawings. In said drawings:
Figure 1 shows a perspective view of a machine according to the invention, in which the machine is closed.
Figure 2 shows a perspective view of the machine of Figure 1 with its carrier tray of the dose collector receptacle being extended.
Figures 3, 4, and 5 show a perspective view, a top plan view, and a front elevational view, respectively, of the machine without the protective covering.
Figure 6 shows a perspective view of the pushing member and the movement means with the carrier tray retracted.
Figure 7 shows a perspective view of the pushing member and the movement means with the carrier tray extended.
Figures 8, 9, and 10 show a top perspective view, a bottom perspective view, and a side elevational view, respectively, of the train of hoppers. Figures 8 and 9 include some hoppers in partially extracted and completely extracted positions.
Figure 11 shows an exploded perspective view of vibration means.
Figures 12, 13, and 14 show cross-section views of the machine in a pre-loading standby position, in a loading position, and in a discharging position, respectively.
Figures 15, 16, 17, and 18 show cross-section views of an injector and its corresponding container in the pre-loaded standby, loading, pre-discharging standby and discharging positions, respectively.
Figures 19 and 20 show perspective views of an injector and its corresponding container in the loading position and in the discharging position, respectively.
Figure 21 shows a top perspective view of a large container.
Figure 22 shows an exploded perspective view of the container of Figure 19.
Figure 23 shows a bottom perspective view of the container of Figure 19.
Figure 24 shows an enlarged partial cross-section view of the area of attachment of the lid and the body of the container, with the corresponding gasket.
Figures 25 to 28 show views equivalent to those of Figures 21 to 24 of a small container.
Figures 29 and 30 show, respectively, a top perspective view and a bottom perspective view of another embodiment of a container.
Figure 31 shows an exploded perspective view of the container of Figures 29 and 30.

### Detailed Description of an Embodiment of the Invention

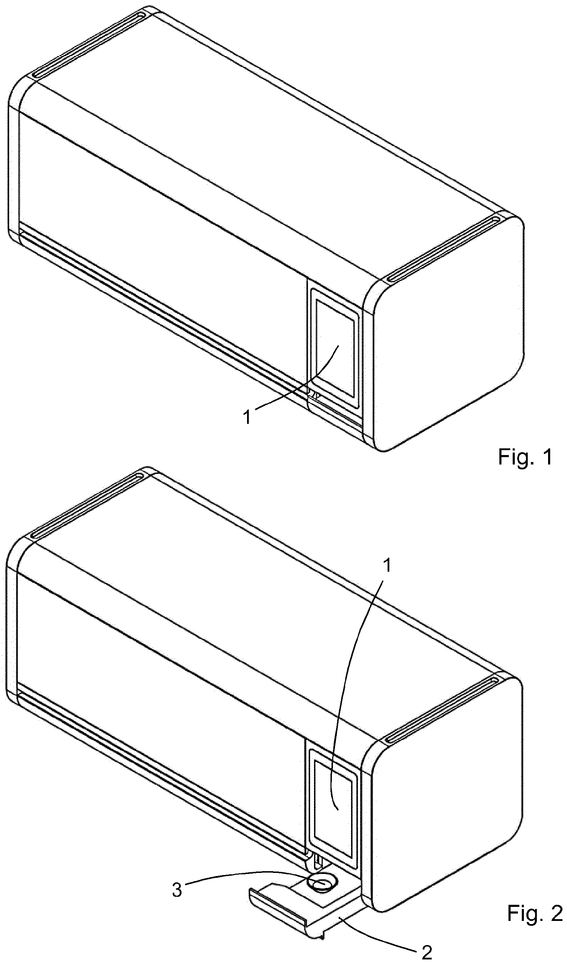

Figures 1 and 2 show an embodiment of a machine according to the invention just as a user would see it. The machine has input means 1 (in this specific case in the form of a control touch screen) through which the user can interact with the machine. The machine receives a code of the dental ceramic composition it must make and once the powder product mixture constituting said dental ceramic composition has been made, it extends a carrier tray 2 carrying a collector receptacle 3 with the prepared mixture. The code of the composition can be entered through the touch screen 1 or through other means, for example, through a connection with another electronic device (for example, a computer). It is also possible to connect the machine directly to color detection means which are capable of detecting the color of a tooth sample, such that based on this detection it is possible to determine which composition will yield a color that most resembles that of the sample.

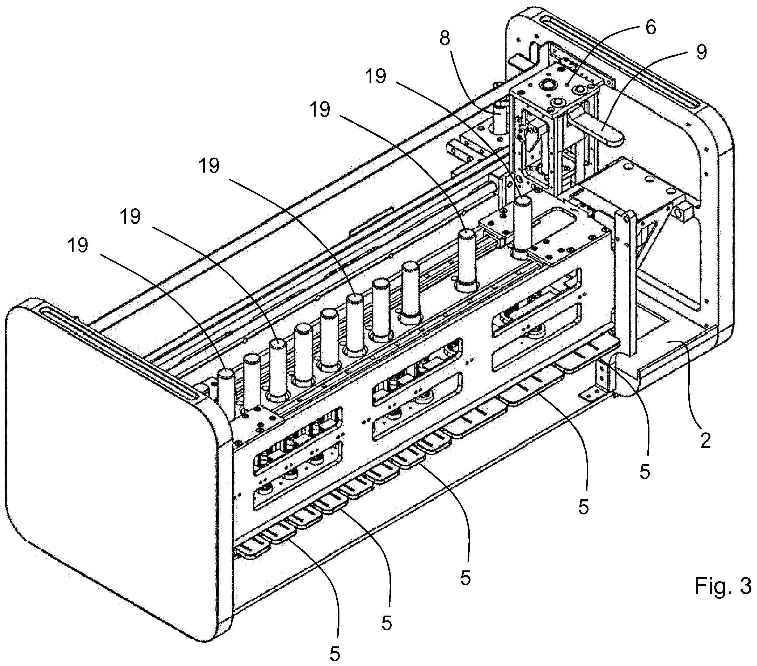

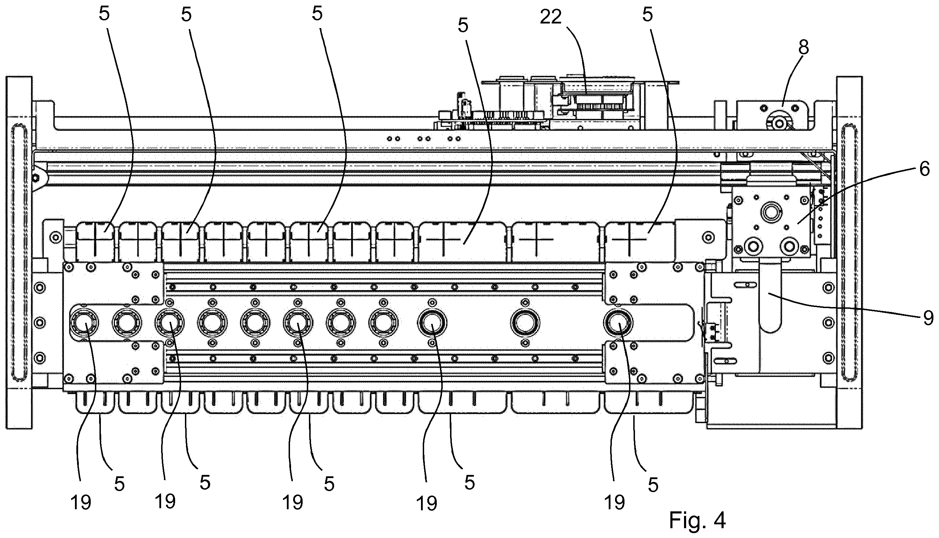

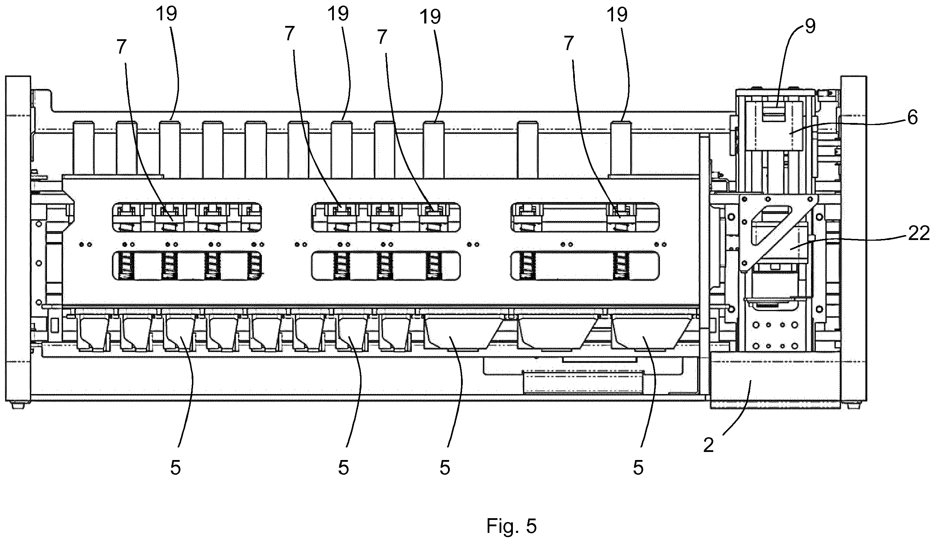

Figures 3 to 5 show the machine without its protective covering, such that the primary components thereof can be seen. The machine comprises eleven containers 5. Each of these containers 5 is a removable cartridge that can be removed from the machine, containing a different powder product with at least one component for preparing a dental ceramic composition. Specifically, the machine has eight small containers 5 (located farthest to the left in Figure 3) that are removable cartridges that can be removed from the machine, and three large containers 5 (located to the right in Figure 3), which are also removable cartridges that can be removed from the machine. The powder product contained in the containers 5 is, for example, a mixture of different products, comprising feldspar, quartz, kaolin, and metallic pigments, among other possible products. Each container 5 contains a different mixture of these products. Preferably, each container 5 contains a mixture of these products with a different metallic pigment composition.

The dose metering device is formed by a pushing member 6, eleven injectors 7 (one for each container 5) and relative movement means 8 which can move the pushing member 6 towards any of the injectors 7.

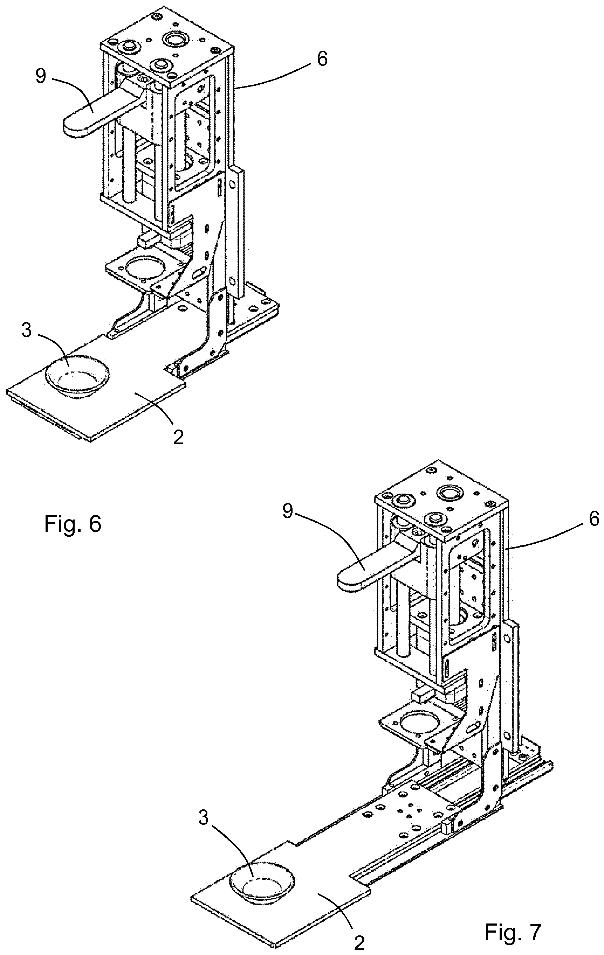

The pushing member 6 (see Figures 6 and 7) has an arm 9 which can be moved vertically and will be responsible for acting on each injector 7. The pushing member 6 moves integrally with the carrier tray 2 and, accordingly, with the collector receptacle 3 which is over the carrier tray 2.

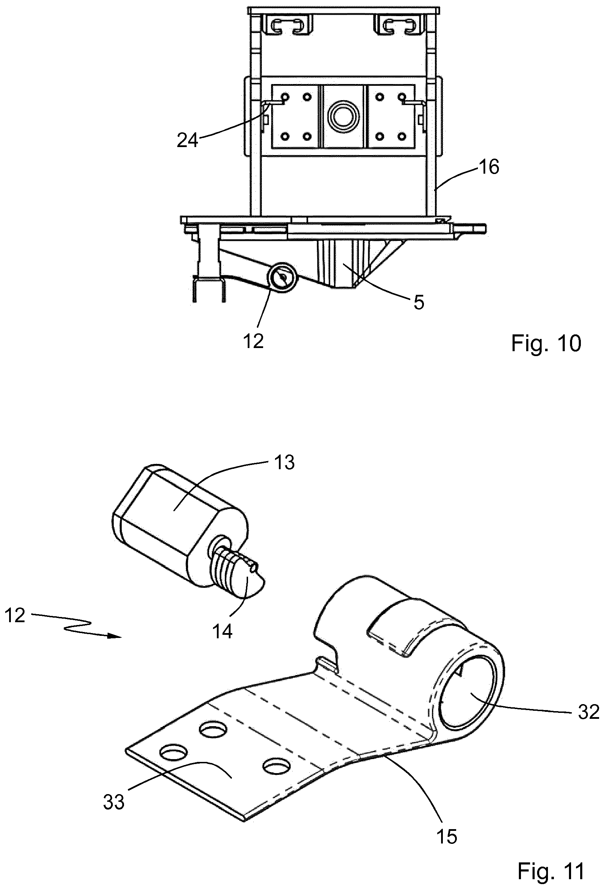

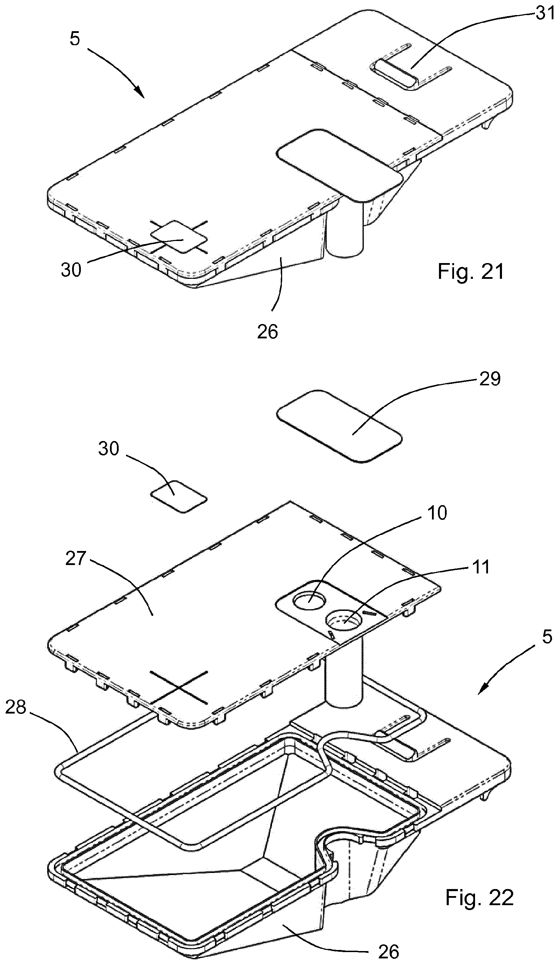

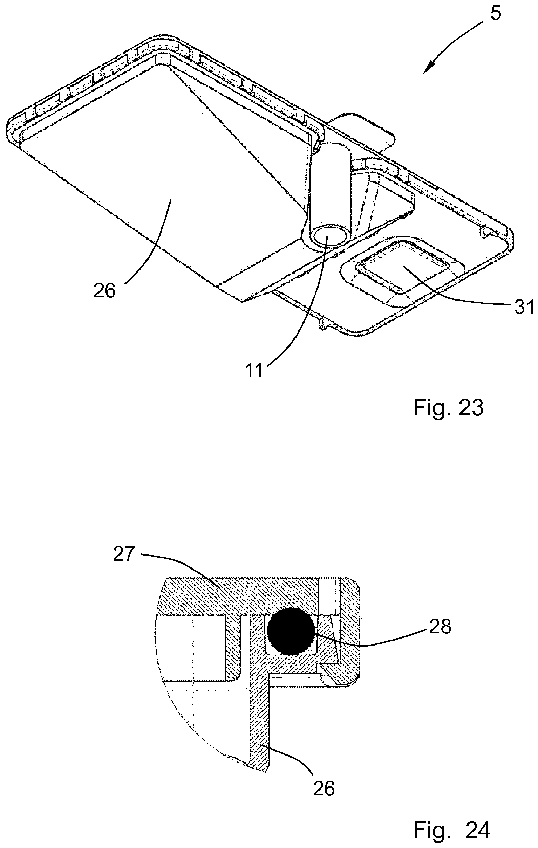

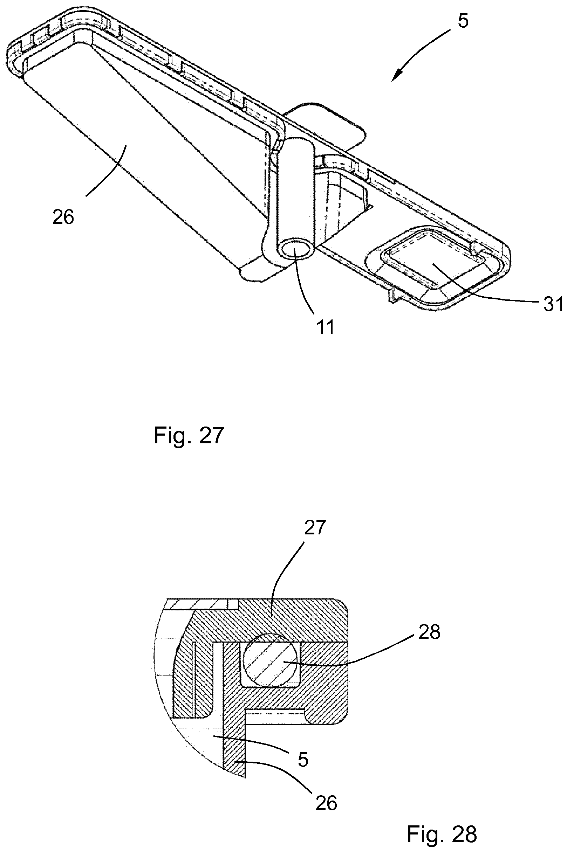

The containers 5 (see Figures 21 to 28) are substantially in the shape of a hopper, such that the emptying of the container 5 is optimized. Each container 5 has an upper inlet hole 10 through which a shaft 18 of the injector 7 may be inserted for taking out a dose of the powder product in the container 5. Each container 5 furthermore has a through hole 11 which, in the specific case shown in the drawings, is formed by a tube against the container 5 that extends from the upper end of the container 5 to the lower end of the container 5. This tube forming the through hole 11 is not in contact with the inside of the container 5. The container 5 is formed by a body 26 and a lid 27. Between the lid 27 and the body 26 there is a gasket 28. A removable sheet 29 closes the inlet hole 10 and the through hole 11 at the top part. This sheet 29 is removed before inserting the container 5 in the machine. The container 5 also includes an identification tag 30, preferably a radio frequency identification RFID tag, including information such as type of powder product, amount of powder product, maximum number of loads, expiration date, etc. The front end of the container 5 is flattened to facilitate gripping by the user and includes fixing means 31, which are preferably a clamping device, for removably fixing the container 5 to the machine when said container 5 is inserted into a corresponding housing provided in said machine. The machine has vibration means 12 associated with each container 5, comprising an electric motor 13 with an eccentric mass 14 which is rotated by said motor 13, thus causing a vibration, and an elastic support 15 with a free end forming a housing 32 for the motor 13 (see Figures 10-11). The elastic support 15 is attached at the other end 33 to a structure 16 supporting the set of the containers 5 and exerting an elastic force that presses the free end with the housing 32 of the motor 13 against one of the side walls of the container 5. In the present example, the large containers 5 contain an amount of 200 g of powder product and the small containers 5 contain an amount of 50 g of powder product. These amounts refer to an initial state of the containers before use.

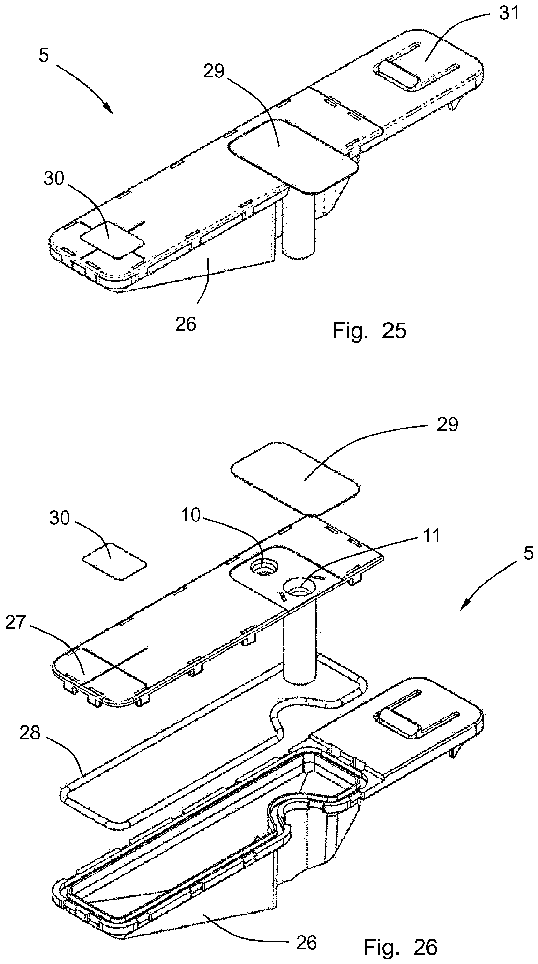

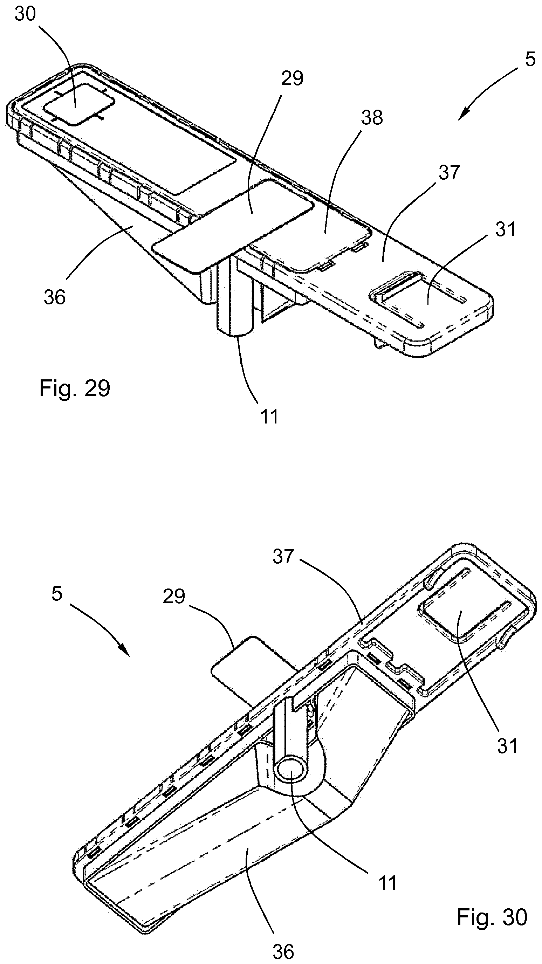

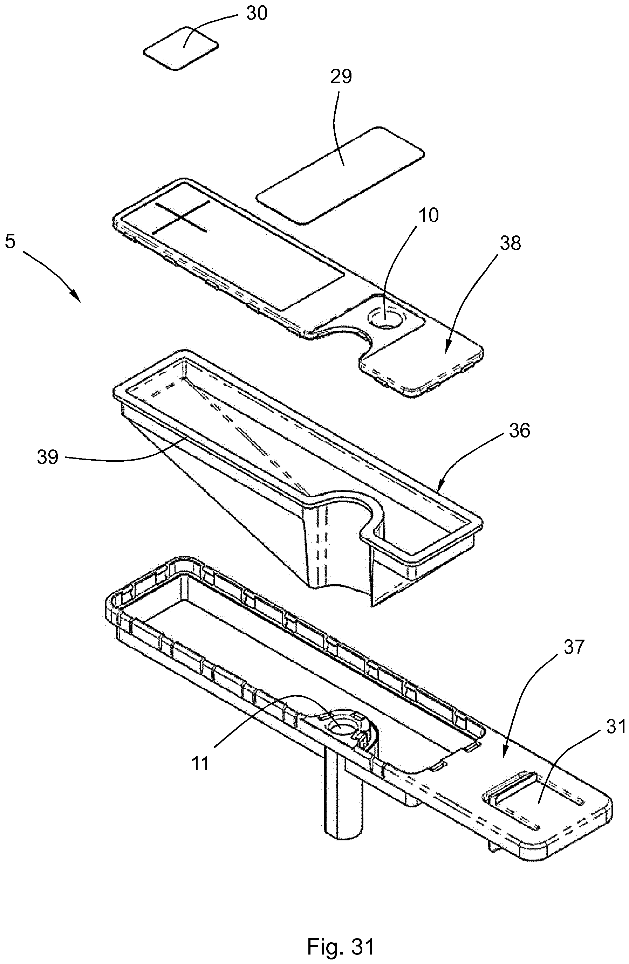

Figures 29-31 show another embodiment of the containers 5. By way of example, the drawings show a small container with the same dimensions as the small container 5 of Figures 25 to 28. The invention likewise provides containers with the same configuration as that of the container of Figures 29-30 but with different dimensions, for example with the same dimensions as the large container 5 of Figures 21-24. The container 5 of Figures 29-31 comprises a body 36 made of an elastomeric material containing a powder product with at least one component of a dental ceramic composition (not shown in the drawings), and a rigid body 37, attached to the body 36 made of an elastomeric material, for removably fixing the container 5 to the machine. The body 36 made of an elastomeric material is preferably in the shape of a hopper. The rigid body 37 is preferably in the shape of a frame in which there fits an upper perimetral rim 39 of the body 36. A rigid lid 38 is press-fit in the rigid body 37 in the shape of a frame, trapping the upper perimetral rim 39 of the body 36 and thus closing the latter in a leak-tight manner, except for the inlet hole 10 formed in the rigid lid 38 itself. The removable sheet 29 closing the inlet hole 10 and the through hole 11 at the top part, and the identification tag 30 which is preferably a radio frequency identification RFID tag are also provided in the rigid lid 38. The through hole 11 is formed by a through tube that is part of the rigid body 37 in the shape of a frame. The fixing means 31 which are preferably a clamping device for fixing the container 5 to the machine, are also formed in the rigid body 37 in the shape of a frame. The elastomeric material constituting the body 36 is, for example, medical grade silicone, or, for example, a thermoplastic elastomer (TPE) such as medical grade thermoplastic polyurethane (TPU). The rigid body 37 in the shape of a frame and the rigid lid 38 are each a molded part made from a polymeric material, for example a thermoplastic such as acrylonitrile butadiene styrene (ABS) or polypropylene (PP).

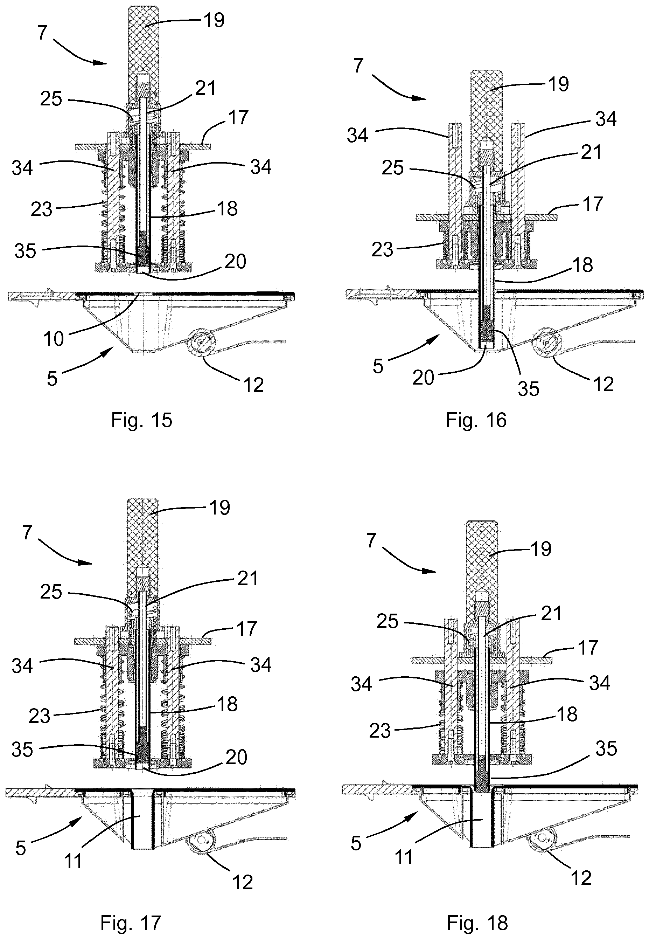

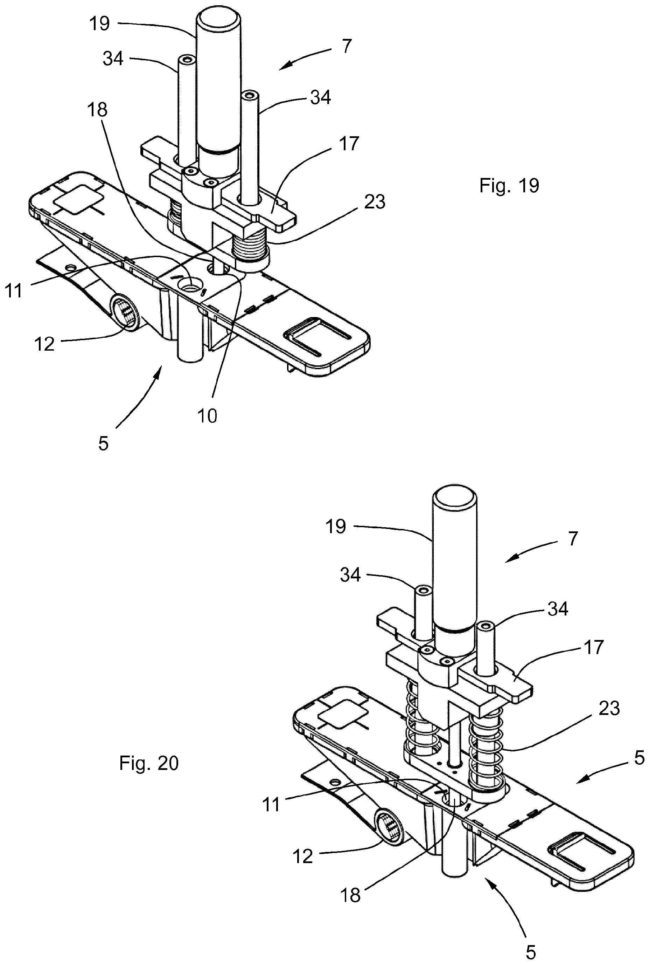

As can be seen in Figures 15-20, each injector 7 comprises a support 17 and a tubular shaft 18 integral with the support 17. The integral assembly formed by the tubular shaft 18 and the support 17 can slide vertically with respect to columns 34 guiding the vertical movement of the support 17. At the upper end of the injector 7 there is a head 19. When the pushing member 6 is facing a specific injector 7, the arm 9 of the pushing member 6 is above the head 19 of the injector 7. As the arm 9 moves downwards, it pushes the head 19 and moves it downwards. The lower end of the shaft 18 is open and defines an open cavity 20, suitable for housing a dose of the powder product in the container 5. A rod 21 provided with a plunger 35 at its end slides inside the shaft 18. The cavity 20 is formed by the inner space of the shaft 18 between the end of the plunger 35 and the end of said shaft 18, such that the volume of said cavity 20 depends on the position of the plunger 35 along the shaft 18. The rod 21 can slide inside the shaft 18 between an upper position (Figures 15-17) in which the end of the plunger 35 is withdrawn into the shaft 18 and the cavity 20 has a predetermined volume, and a lower position (Figure 18) in which the end of the plunger is not withdrawn into the shaft 18 and the cavity 20 is inexistent (or has nil volume). In the injectors 7 coupled to a large container 5, the predetermined volume of the cavity 20 is suitable for housing 0.2 g of powder product of said container 5, whereas in the injectors 7 coupled to a small container 5, the predetermined volume of the cavity 20 is suitable for housing 0.04 g of powder product of said container 5. It must be taken into account that for making a specific mixture, it may not be necessary to take a dose of powder product from each and every one of the containers 5, and it is also possible that it may be necessary to take more than one dose from one or more of the containers 5. The predetermined volume of the cavities 20 is such that it allows obtaining any of the defined mixtures by taking one or more doses from the necessary containers 5 in each case.

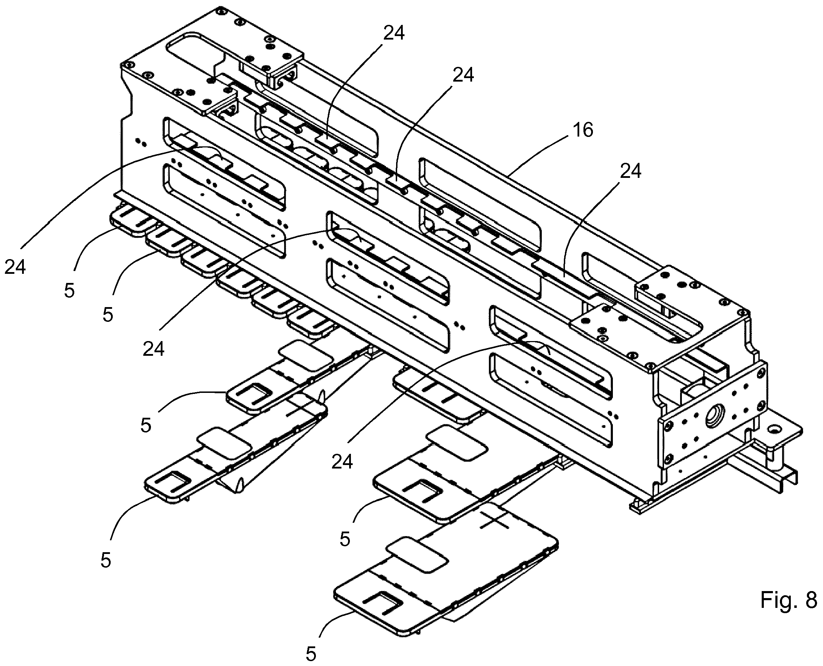

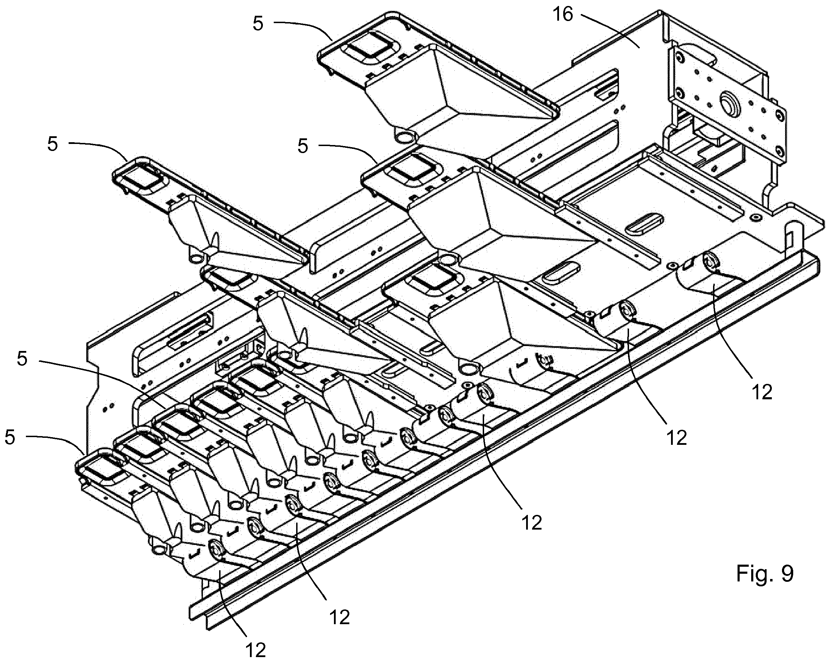

The structure 16 supporting the set of containers 5, making up what is referred to as the train of hoppers shown in Figures 8-10, can be moved horizontally as a result of second movement means 22.

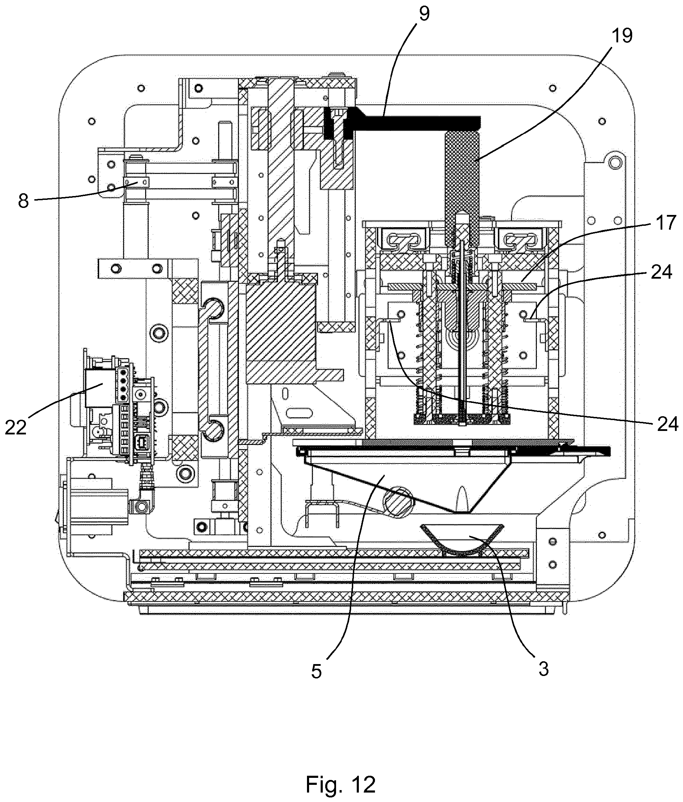

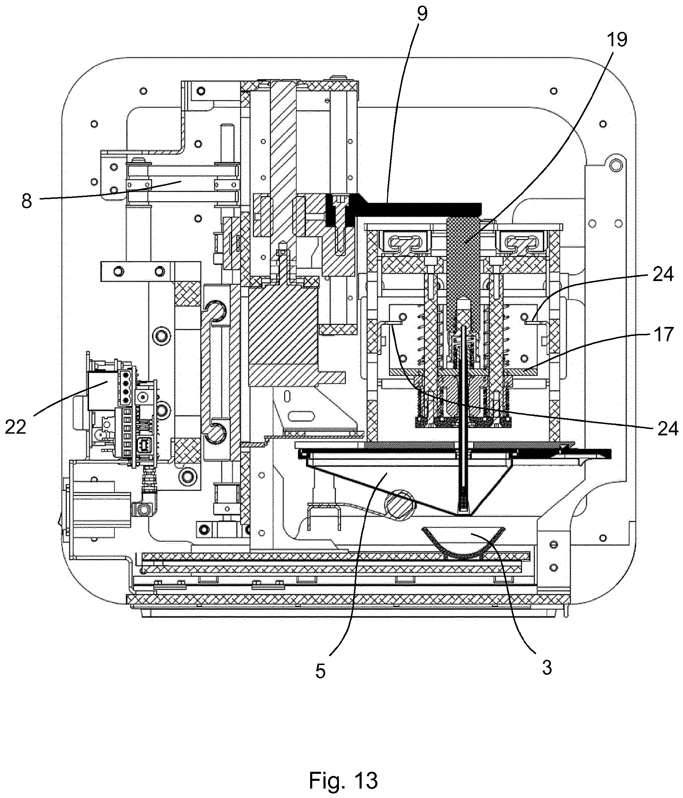

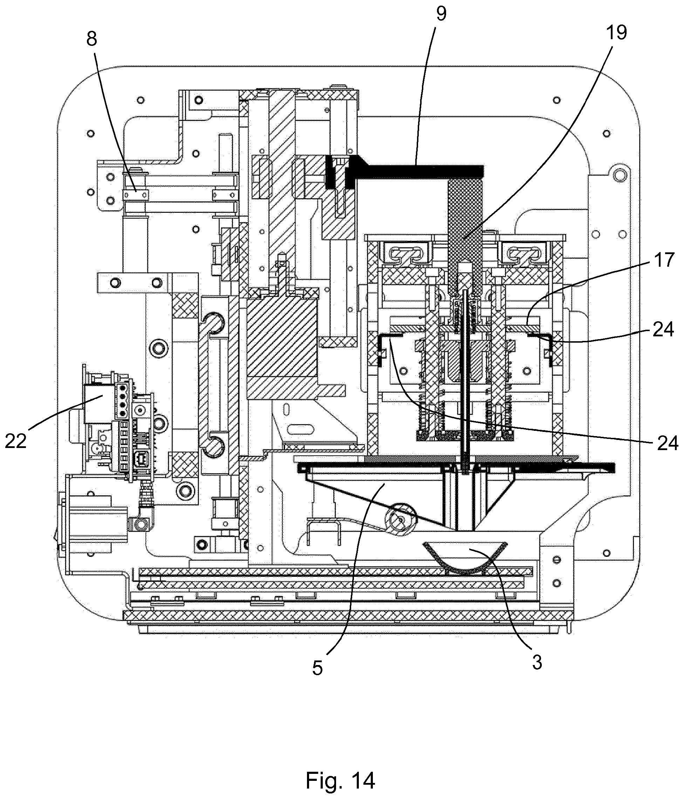

Figures 12 to 18 show the machine in various positions during a sequence of movements for loading a dose of powder product from one container 5 and discharging it into the collector receptacle 3. Figures 12 to 14 show a cross-section of the machine as a whole, whereas Figures 15 to 18 show an injector 7 and its corresponding container 5 isolated from the rest of the machine. There are four main positions:
- a pre-loading standby position, in which the pushing member 6 has moved from its final position on the right end of the machine until being positioned facing the container 5 from which a dose of powder product is to be taken; the container 5 is positioned with respect to the injector 7 such that the shaft 18 is aligned with the inlet hole 10; the lower end of the shaft 18 is above the inlet hole 10; the rod 21 with its plunger 35 is in its upper position with respect to the shaft 18, thus maintaining the predetermined volume of the cavity 20 (see Figures 12 and 15);
- a loading position, in which a dose of powder product from the container 5 is loaded in the corresponding injector 7; the pushing member 6 has dropped down and pushed the head 19 downwards; the end of the shaft 18 is inserted into the container 5 through the inlet hole 10 (see Figures 13, 16, and 19);
- a pre-discharging standby position, in which the container 5 has been repositioned with respect to the injector 7 by means of the second movement means 22, such that the shaft 18 is aligned with the through hole 11; the lower end of the shaft 18 is above the through hole 11 (see Figure 17);
- and a discharging position, in which the dose of powder product is discharged into the collector receptacle 3; the pushing member 6 has again dropped down and pushed the head 19 downwards; the end of the shaft 18 is inserted into the through hole 11; the rod 21 with its plunger 35 has dropped down to its lower position with respect to the shaft 18, making the cavity 20 disappear (see Figures 14, 18, and 20).

In the pre-loading standby position, the pushing member 6 has moved from its final position until it is arranged facing the pair formed by the injector 7 and the container 5 from which a dose of powder product is to be taken. This movement is performed as a result of the movement means 8. In this position, the shaft 18 of the injector 7 is arranged above the inlet hole 10 of the container 5.

To transition to the loading position, the pushing member 6 drops down and the arm 9 pushes the head 19 of the injector 7 downwards. The head 19 in turn pushes the rod 21, such that the end of the shaft 18 is inserted into the container 5 through the inlet hole 10. The rod 21 and the shaft 18 are kept integral with one another by means of a discharge spring 25, which holds the upper position of the rod 21 with respect to the shaft 18, thus maintaining the predetermined volume of the cavity 20. The lower end of the shaft 18 is inserted into the mass of powder product in the container 5 and the cavity 20 fills with powder product.

The pushing member 6 then moves back up and the assembly of the shaft 18 and the rod 21 also moves until the end of the shaft 18 exits the container 5, as a result of springs 23 arranged in the columns 34, which push support 17 integral with the shaft 18 upwards.

Once the shaft 18, with the cavity 20 filled with powder product, exits the container 5, the container 5 is moved with respect to the injector 7 by means of the second movement means 22, until the shaft 18 is above the through hole 11 and aligned with same. This is the position referred to as pre-discharging standby position.

To transition to the discharging position, the pushing member 6 again drops down and the arm 9 again pushes the head 19 downwards. However, in this position, locking tabs 24 limit the downward movement of the shaft 18, since they prevent the passage of the support 17, abutting against said locking tabs 24. The locking tabs 24 are arranged in a position such that they only intersect the support 17 when transitioning from the pre-discharging standby position to the discharging position (and not when transitioning from the pre-loading standby position to the loading position, where the container 5 has a different position with respect to the injector 7), and such that when the support 7 abuts against the locking tabs 24, the end of the shaft 18 has already entered the through hole 11. From the time that the support 17 comes into contact with the locking tabs 24, the head 19 continues with its travel, only the rod 21 moving against the action of the discharge spring 25. The rod 21 is thereby moved with respect to the shaft 18, such that the plunger 35 advances towards the end of the shaft 18 until eliminating the volume of the cavity 20. The plunger 35 thereby pushes the powder product contained in said cavity 20, which falls through the through hole 11 into the collector receptacle 3, which is below said through hole 11.

To go back to the pre-loading standby position, the pushing member 6 again moves upwards, whereby the rod 21 and the shaft return both to their absolute position as a result of the action of the springs 23, and to their relative position as a result of the action of the discharge spring 25. The second movement means 22 again move the container 5 to its initial position with respect to the injector 7.

Once the dose (or doses) from a container 5 have been loaded, the pushing member 6 moves to the next container 5 and the above-described sequence is repeated. Once all the doses have been deposited in the collector receptacle 3, the pushing member 6 moves to its final position and the carrier tray 2 extends out of the machine, offering the collector receptacle 3 with the mixture to the user (Figure 2).

## Claims

1. A machine for automatically preparing a dental ceramic composition, comprising:
[a] data input means for inputting data relating to said dental ceramic composition;
[b] a plurality of containers (5) each of which contains a powder product with at least one component of said dental ceramic composition;
[c] a dose metering device suitable for taking a dose of said powder product from said containers (5); and
[d] a control system for said dose metering device, configured for:
[d1] determining the powder product doses of each of said containers (5) necessary for obtaining said ceramic from said data, and
[d2] activating said dose metering device to meter out the doses determined in [d1];
**characterized in that** said containers (5) are removable cartridges.

2. The machine according to claim 1, **characterized in that** said dose metering device is formed by a pushing member (6), a plurality of injectors (7), each of said injectors (7) associated with a container (5), and relative movement means (8) for relative movement between said pushing member (6) and said injectors (7).

3. The machine according to one of claims 1 or 2, **characterized in that** said containers (5) are in the shape of a hopper.

4. The machine according to any one of claims 1 to 3, **characterized in that** each container (5) comprises an upper inlet hole (10) and each injector (7) comprises a shaft (18) suitable for being inserted through said inlet hole (10) when it is pushed by means of said pushing member (6), wherein said shaft (18) has, at its lower end, a cavity (20) suitable for housing a dose of said powder product.

5. The machine according to claim 4, **characterized in that** each container (5) comprises a through hole (11) which goes through said container (5) and is suitable for said shaft (18) to go through same, wherein said through hole (11) is not in contact with the inside of said container (5) in which said powder product is located.

6. The machine according to any one of claims 1 to 5, **characterized in that** it comprises second relative movement means (22) suitable for moving each of said containers (5) with respect to their corresponding associated injector (7).

7. The machine according to any one of claims 1 to 6, **characterized in that** said pushing member (6) moves integrally with a carrier tray (2), suitable for carrying a collector receptacle (3) for collecting said doses.

8. The machine according to any one of claims 1 to 7, **characterized in that** at least one of said containers (5) has a larger capacity than the remaining containers (5).

9. The machine according to claim 8, **characterized in that** the injector (7) associated with a container (5) having a larger capacity has a cavity (20) having a larger volume than the injector (7) associated with a container (5) having a smaller capacity.

10. The machine according to any one of claims 1 to 9, **characterized in that** each container (5) comprises:
- a body (36) made of an elastomeric material containing said powder product with at least one component of a dental ceramic composition, and
- a rigid body (37), attached to said body (36) made of an elastomeric material, for removably fixing said container (5) to said machine.

11. The machine according to any one of claims 1 to 10, **characterized in that** it comprises more than five containers (5).

12. The machine according to any one of claims 1 to 11, **characterized in that** it comprises vibration means (12) suitable for vibrating said containers (5).

13. The machine according to any one of claims 1 to 12, **characterized in that** said through hole (11) extends to the lower end of said container (5).

14. A container (5) for a machine for automatically preparing a dental ceramic composition, **characterized in that** it
- contains a powder product with at least one component of a dental ceramic composition;
- is in the shape of a hopper;
- comprises an upper inlet hole (10) suitable for a shaft (18) of an injector (7) to go through same, wherein said shaft (18) has, at its lower end, a cavity (20) suitable for housing a dose of said powder product; and
- is a removable cartridge that can be removed from said machine.

15. The container (5) according to claim 14, **characterized in that** is in the shape of a hopper.

16. The container (5) according to any one of claims 14 or 15, **characterized in that** it comprises a through hole (11) which goes through said container and is suitable for said shaft (18) to go through same, wherein said through hole (11) is not in contact with the inside of said container (5) in which said powder product is located.

17. The container (5) according to claim 16, **characterized in that** said through hole (11) extends to the lower end of said container (5).

18. The container (5) according to any one of claims 14 to 17, **characterized in that** it comprises:
- a body (36) made of an elastomeric material containing said powder product with at least one component of a dental ceramic composition, and
- a rigid body (37), attached to said body (36) made of an elastomeric material, for removably fixing said container (5) to said machine.

19. A set of containers (5) for a machine for automatically preparing a dental ceramic composition, wherein each of said containers (5) is a container (5) according to any one of claims 14 to 18, and each of said containers (5) is a removable cartridge that can be removed from said machine, and wherein the powder product contained in at least one of said containers (5) is different from the powder product contained in at least another one of said containers (5).
